# EUROPÄISCHE PATENTSCHRIFT

(11) **EP 4 183 563 B1**
(45) Veröffentlichungstag und Bekanntmachung des Hinweises auf die Patenterteilung: **04.06.2025**
(21) Anmeldenummer: 22203504.0
(22) Anmeldetag: 25.10.2022
(51) Int. Cl.: B29D 30/08, B29D 30/16, B29D 30/72

(54) **VERFAHREN UND VORRICHTUNG ZUR HERSTELLUNG EINES FAHRZEUGREIFENS UMFASSEND MINDESTENS EINE SEITENWAND MIT MINDESTENS ZWEI ABSCHNITTEN UND FAHRZEUGREIFEN**
METHOD AND DEVICE FOR PRODUCING A VEHICLE TYRE COMPRISING AT LEAST ONE SIDEWALL WITH AT LEAST TWO SECTIONS AND VEHICLE TYRE
PROCÉDÉ ET DISPOSITIF DE FABRICATION D'UN PNEU DE VÉHICULE COMPRENANT AU MOINS UNE PAROI LATÉRALE COMPRENANT AU MOINS DEUX SECTIONS ET PNEU DE VÉHICULE

(30) Priorität: 18.11.2021 DE 102021213014
(43) Veröffentlichungstag der Anmeldung: 24.05.2023
(73) Patentinhaber: Continental Reifen Deutschland GmbH, 30175 Hannover (DE)
(72) Erfinder: Thomfohrde, Claudia, 30165 Hannover (DE); Kneussel, Ewald, 30165 Hannover (DE); Kastens, Sven, 30165 Hannover (DE); Linne, Stefan, 30165 Hannover (DE); Feiler, Nikolaj, 30165 Hannover (DE)
(74) Vertreter: Continental Corporation

(56) Entgegenhaltungen:
- EP-A1- 0 937 571
- EP-B1- 1 094 930
- DE-A1- 102005 003 856

## Beschreibung

Die Erfindung betrifft ein Verfahren zur Herstellung eines Fahrzeugreifens gemäß dem Patentanspruch 1 sowie eine Vorrichtung zur Herstellung eines Fahrzeugreifens gemäß dem Patentanspruch 9. Ferner betrifft die Erfindung die Verwendung einer solchen Vorrichtung gemäß dem Patentanspruch 10 sowie einen Fahrzeugreifen gemäß dem Patentanspruch 11.

Die Produktion eines Fahrzeugreifens erfolgt heutzutage in verschiedenen Fertigungsstufen, wobei einer dieser Fertigungsstufen den Reifenaufbau umfasst, bei dem die einzelnen Komponenten zu einem Reifenrohling zusammengefügt werden. Die wesentlichen Komponenten umfassen üblicherweise eine Karkasse, zwei Seitenwände und ein Laufstreifenpaket, wobei die Karkasse selbst in der Regel aus mindestens einer Innenschicht, einer Einlage und zwei Kernen mit Apex besteht und in einem ersten Schritt geformt wird. Im Folgenden zweiten Expansionsschritt wird die geformte Karkasse auf eine Bombiertrommel gebracht und in ein Paket aus Gürtellagen, Spulbandage und Laufstreifen expandiert. Das Paket aus Gürtellagen, Spulbandage und Laufstreifen wird nachfolgend auch Laufstreifenpaket oder Gürtelpaket genannt.

Der Aufbau eines Reifenrohlings erfolgt im Stand der Technik auf einer oder mehreren Trommeln, wobei die einzelnen Komponenten von Hand oder automatisch aufgelegt und zusammengefügt werden. Beispielsweise wird die Karkasse auf einer Karkasstrommel und das Laufstreifenpaket oder Gürtelpaket auf einer Gürteltrommel aufgebaut. Das Zusammenfügen der einzelnen Komponenten der Karkasse, der Seitenwände sowie des Laufstreifenpakets ist ein hoch komplexer Verfahrensschritt, dessen Ziel es ist, einen Fahrzeugreifen zu produzieren, der die heutigen Qualitätsanforderungen erfüllt.

In der DE102005003856A1 ist ein Verfahren zur Herstellung eines Luftreifens mit Reifenaufbauteilen offenbart, mit dem auf eine einfache Weise und mit einer hohen Prozessgeschwindigkeit der Aufbau der Reifenseitenwand erfolgt.

Derzeitig erfolgt der Aufbau der Seitenwände im Zuge des Herstellungsprozesses für den Fahrzeugreifen durch das Auflegen der Seitenwände auf eine Trommel in einer Trommelumdrehung oder eine vorgeformte Karkasse, wobei die Seitenwände dann in einem Bauteil bestehend entweder an die Form der Karkasse angepasst werden oder in einem Verfahrensschritt expandiert und mit dem Gürtelpaket zusammengefügt werden. Nachteilig derzeitiger Verfahren und Vorrichtungen ist, dass die Komplexität in der Materialvorbereitung und Logistik sehr hoch ist, um die Bandbreite an Seitenwandvarianten an die Maschine zu bekommen. Entsprechend nachteilig sind derzeitige Fahrzeugreifens aufgrund des Aufbaus der Seitenwände und weisen somit Verbesserungspotenzial insbesondere in Bezug auf den Rundlauf auf.

Hier setzt die vorliegende Erfindung an. Es ist die Aufgabe der vorliegenden Erfindung ein Verfahren zur Herstellung eines Fahrzeugreifens bereitzustellen, durch welches die Qualität des Fahrzeugreifens, insbesondere in Bezug auf den Rundlauf, verbessert wird. Ferner ist es die Aufgabe der Erfindung eine Vorrichtung zur Herstellung eines Fahrzeugreifens bereitzustellen, durch die der Fahrzeugreifen, insbesondere in Bezug auf den Rundlauf, verbessert wird. Außerdem ist die Aufgabe der Erfindung einen Fahrzeugreifen bereitzustellen, der verbesserte Eigenschaften, insbesondere in Bezug auf den Rundlauf, aufzeigt.

Gelöst wird die Aufgabe durch ein Verfahren zur Herstellung eines Fahrzeugreifens mit den Merkmalen des Patentanspruchs 1. Ferner wird die Aufgabe durch eine Vorrichtung mit den Merkmalen des Patentanspruchs 9 sowie durch einen Fahrzeugreifen mit den Merkmalen des Patentanspruchs 11 gelöst.

Die Aufgabe der vorliegenden Erfindung wird durch ein Verfahren zur Herstellung eines Fahrzeugreifens gelöst, wobei der Fahrzeugreifen mindestens eine Karkasse, mindestens zwei Seitenwände und ein Gürtelpaket aufweist, wobei mindestens eine Seitenwand mindestens zwei Abschnitte aufweist und die Herstellung der mindestens einen Seitenwand zumindest die folgenden Schritte umfasst:
- Herstellen eines ersten Abschnitts der mindestens einen Seitenwand durch Auflegen eines ersten Streifens aus mindestens einer Kautschukmischung auf die Auflegeeinheit oder auf eine vorgeformte Karkasse, wobei der erste Streifen einmal um die Auflegeeinheit auflegbar ist und
- Herstellen eines zweiten Abschnitts der mindestens einen Seitenwand durch spiralförmiges Aufspulen eines zweiten Streifens aus mindestens einer Kautschukmischung auf die Auflegeeinheit oder auf die vorgeformte Karkasse, wobei entweder zuerst der erste Abschnitt oder zuerst der zweite Abschnitt hergestellt wird.

Vorteilhafterweise verringert sich durch das erfindungsgemäße Verfahren deutlich der Aufwand in der Materialvorbereitung. Außerdem ist ein hohes Maß an Flexibilität möglich, da die Seitenwandkonturen schnell und einfach bezüglich des Materials und der Konturen gewechselt werden können. Durch das spiralförmige Aufspulen des zweiten Abschnitts kann in diesem Abschnitt ein breiter Überlapp gewährleistet werden. Insgesamt zeigt ein Fahrzeugreifen, welcher durch das erfindungsgemäße Verfahren hergestellt wird, deutlich verbesserte Eigenschaften hinsichtlich der Qualität sowie des Rundlaufs.

Erfindungsgemäß weist die mindestens eine Seitenwand mindestens zwei Abschnitte auf, die sich darin unterscheiden, dass der erste Abschnitt mit im Wesentlichen einer Umlage um die eine Auflegeeinheit oder die vorgeformte Karkasse passt und der zweite Abschnitt spiralförmig mittels Strip-Winding aufgespult wird. Das Strip-Winding ist im Stand der Technik bekannt. Im Sinne der Erfindung wird unter Strip-Winding verstanden, dass ein Endlosstreifen auf die Auflegeeinheit oder auf die vorgeformte Karkasse gespult wird, wobei sich die aufgespulten Streifenabschnitte zumindest teilweise überlappen können. Erfindungsgemäß kann sowohl der erste Abschnitt als auch der zweite Abschnitt zuerst hergestellt werden. Ferner können weitere Verfahrensschritte zwischen der Herstellung des ersten und zweiten Abschnitts oder je nach Reihenfolge des zweiten Abschnitts und des ersten Abschnitts ablaufen. Im Sinne der Erfindung bilden der erste und der zweite Abschnitt eine Seitenwand. Beide Abschnitte können die gleiche Kautschukmischung und/oder eine unterschiedliche Kautschukmischung umfassen.

Denkbar ist bevorzugt, dass die Seitenwand mehr als zwei Abschnitte aufweist, wobei mindestens einer dieser Abschnitte aufgespult und mindestens ein Abschnitt in einem Trommelumlauf aufgelegt wird. Beispielsweise könnten zwei Abschnitte aufgespult werden, wodurch die Seitenwand vorteilhafterweise individuell den Anforderungen angepasst werden kann. Es ist ferner bevorzugt denkbar, dass der zweite Abschnitt zwei unterschiedliche aufgespulte Streifen umfasst. Dies kann vorteilhaft sein, um beispielsweise unterschiedliche Kautschukmischungen und/oder unterschiedliche Breiten einzusetzen.

In einer weiteren bevorzugten Ausführungsform der Erfindung wird der zweite Abschnitt im Bereich über dem Wulstbereich in Richtung der Lauffläche aufgespult. Vorteilhafterweise ist damit der zweite Abschnitt der Bereich der Seitenwand, der sich im späteren Reifen über dem Wulstbereich erstreckt. Dieser zweite Abschnitt kann individuell aufgespult werden, um die Anforderungen des Fahrzeugreifen im Rundlauf besser zu erfüllen.

In einer weiteren bevorzugten Ausführungsform der Erfindung ist der erste Streifen des ersten Abschnitts ein zumindest teilweise konturierter Streifen. Denkbar ist, dass die Fläche, die nicht auf der Auflegeeinheit oder der vorgeformten Karkasse aufliegt, konturiert ist, nämlich ein Profil aufweist. Diese Fläche ist im späteren Reifen somit sichtbar. Vorteilhafterweise kann der erste Abschnitt somit an die zu erreichende Profilform angepasst werden.

In einer weiteren bevorzugten Ausführungsform der Erfindung weisen der erste Streifen eine Breite im Bereich von 20 mm bis 70 mm und/oder der zweite Streifen eine Breite im Bereich von 30 mm bis 300 mm Gesamtbreite oder als Einzelstreifen von 5 mm bis 40 mm aufweist. Wesentlich ist, dass der aufgespulte zweite Streifen als Einzelstreifen schmaler als der aufgelegte erste Streifen ist. Vorteilhaft ist, dass der schmalere zweite Einzelstreifen mehrfach um die Auflegeeinheit gespult werden kann, wobei die Seitenflächen der einzelnen Streifen überlappen können.

Insgesamt kann der zweite Abschnitt somit individuell in Bezug auf die Dicke und somit an die Anforderungen in diesem Bereich angepasst werden.

Weiterhin bevorzugt wird der erste Abschnitt nach dem Auflegen um den Wulstbereich heruntergearbeitet. Dabei wird ein Teil des ersten Abschnitts auf die Auflegeeinheit oder die vorgeformte Karkasse aufgelegt, wobei der überstehende Bereich entlang der Oberfläche der Karkasse um den Wulstbereich heruntergearbeitet wird. Besonders bevorzugt wird der zweite Abschnitt nach dem Herunterarbeiten des ersten Abschnitts aufgespult. Denkbar ist alternativ, dass der zweite Abschnitt zuerst aufgespult und der erste Abschnitt der Seitenwand anschließend aufgelegt und heruntergearbeitet wird. Vorteilhaft ist, dass dieses verbesserte Verfahren mit derzeitigen Verfahren kombiniert werden kann, wodurch sich insgesamt die Qualität des Fahrzeugreifens, insbesondere in Bezug auf den Rundlauf, verbessert.

Alternativ dazu wird der erste Abschnitt bevorzugt nach dem Auflegen um den Wulstbereich hochgearbeitet. Dabei wird ein Teil des ersten Abschnitts im Wulstbereich unterhalb des Kerns auf die vorgeformte Karkasse aufgelegt und der überstehende Bereich entlang der Oberfläche der Karkasse hochgearbeitet. Anschließend kann der zweite Abschnitt bevorzugt nach dem Hocharbeiten des ersten Abschnitts aufgespult werden, wobei das Aufspulen alternativ auch vor dem Auflegen und Hocharbeiten des ersten Abschnitts erfolgen kann. Vorteilhafterweise kann die Qualität des Fahrzeugreifens insgesamt, insbesondere in Bezug auf den Rundlauf, verbessert werden.

In einer weiteren bevorzugten Ausführungsform der Erfindung werden zwei Seitenwände parallel auf einer Auflegeeinheit oder einer vorgeformten Karkasse hergestellt, wobei beide Seitenwände jeweils mindestens zwei Abschnitte aufweisen und nach dem beschriebenen Verfahren hergestellt werden. Vorteilhafterweise ist somit ein Fahrzeugreifen, der üblicherweise zwei Seitenwände aufweist, mit verbesserter Qualität, insbesondere in Bezug auf den Rundlauf, herstellbar.

Weiterhin bevorzugt umfasst die Auflegeeinheit eine Trommel, besonders bevorzugt eine Karkasstrommel oder eine Bombiertrommel oder eine kombinierte Karkass- und Bombiertrommel oder eine kombinierte Karkass- und Bombiertrommel. Denkbar ist, dass eine Karkasstrommel auch als Wickeltrommel bezeichnet wird. Vorteilhaft ist, dass eine solche Trommel dazu ausgebildet, auf dieser das entsprechende Bauteil herzustellen. Beispielsweise ist auf der Karkasstrommel die Karkasse herstellbar.

In einer bevorzugten Ausführungsform der Erfindung umfasst das Verfahren zur Herstellung eines Fahrzeugreifens, wobei der Fahrzeugreifen mindestens eine Karkasse, mindestens zwei Seitenwände und ein Gürtelpaket aufweist, wobei mindestens eine Seitenwand mindestens zwei Abschnitte aufweist, zumindest die folgenden Schritte:
- Bereitstellen einer Auflegeeinheit, insbesondere einer Trommel,
- Aufbauen einer Karkasse auf der Auflegeeinheit, indem eine Innenschicht, mindestens eine Einlage mit zwei Kernen mit Apex zusammengefügt werden,
- Vorformen der Karkasse,
- Herstellen eines ersten Abschnitts der mindestens einen Seitenwand durch Auflegen eines ersten Streifens aus mindestens einer Kautschukmischung auf die vorgeformte Karkasse, wobei der erste Streifen einmal um die Auflegeeinheit auflegbar ist und
- Herstellen eines zweiten Abschnitts der mindestens einen Seitenwand durch spiralförmiges Aufspulen eines zweiten Streifens aus mindestens einer Kautschukmischung auf die vorgeformte Karkasse,
wobei entweder zuerst der erste Abschnitt oder zuerst der zweite Abschnitt hergestellt wird.
- Expansion der vorgeformten Karkasse mit den Seitenwänden in ein Gürtelpaket, wobei ein Reifenrohling entsteht und
- Vulkanisierung des Reifenrohlings zu einer Fahrzeugreifen.

Alternativ umfasst das Verfahren zur Herstellung eines Fahrzeugreifens in einer anderen bevorzugten Ausführungsform der Erfindung, wobei der Fahrzeugreifen mindestens eine Karkasse, mindestens zwei Seitenwände und ein Gürtelpaket aufweist, wobei mindestens eine Seitenwand mindestens zwei Abschnitte aufweist, zumindest die folgenden Schritte:
- Bereitstellen einer Auflegeeinheit, insbesondere einer Trommel,
- Herstellen eines ersten Abschnitts der mindestens einen Seitenwand durch zumindest teilweises Auflegen eines ersten Streifens aus mindestens einer Kautschukmischung auf die Auflegeeinheit, wobei der erste Streifen einmal um die Auflegeeinheit auflegbar ist,
- Herstellen eines zweiten Abschnitts der mindestens einen Seitenwand durch spiralförmiges Aufspulen eines zweiten Streifens aus mindestens einer Kautschukmischung auf die Auflegeeinheit,
wobei entweder zuerst der erste Abschnitt oder zuerst der zweite Abschnitt hergestellt wird,
- Auflegen der Bauteile einer Karkasse auf die Auflegeeinheit und die Seitenwände, insbesondere einer Innenschicht, mindestens einer Einlage mit zwei Kernen mit Apex und
- Zusammenfügen der Karkassbauteile mit dem Gürtelpaket und Hoch- oder Herunterarbeiten der ersten Abschnitte der Seitenwände entlang der Karkasse, wobei das Hoch- oder Herunterarbeiten vor oder nach dem Zusammenfügen oder während des Zusammenfügens erfolgt.

Ferner alternativ umfasst das Verfahren zur Herstellung eines Fahrzeugreifens in einer anderen bevorzugten Ausführungsform der Erfindung, wobei der Fahrzeugreifen mindestens eine Karkasse, mindestens zwei Seitenwände und ein Gürtelpaket aufweist, wobei mindestens eine Seitenwand mindestens zwei Abschnitte aufweist, zumindest die folgenden Schritte:
- Bereitstellen einer Auflegeeinheit, insbesondere einer Trommel,
- Herstellen eines ersten Abschnitts der mindestens einen Seitenwand durch zumindest teilweises Auflegen eines ersten Streifens aus mindestens einer Kautschukmischung auf die Auflegeeinheit, wobei der erste Streifen einmal um die Auflegeeinheit auflegbar ist,
- Auflegen der Bauteile einer Karkasse auf die Auflegeeinheit und den ersten Abschnitt der Seitenwände, insbesondere einer Innenschicht, mindestens einer Einlage mit zwei Kernen mit Apex,
- Herstellen eines zweiten Abschnitts der mindestens einen Seitenwand durch spiralförmiges Aufspulen eines zweiten Streifens aus mindestens einer Kautschukmischung auf die Auflegeeinheit und
- Zusammenfügen der Karkassbauteile mit dem Gürtelpaket und Hoch- oder Herunterarbeiten der ersten Abschnitte der Seitenwände entlang der Karkasse, wobei das Hoch- oder Herunterarbeiten vor oder nach dem Zusammenfügen oder während des Zusammenfügens oder vor der Herstellung des zweiten Abschnitts erfolgt.

Weiterhin wird die Aufgabe der Erfindung durch eine Vorrichtung zur Herstellung eines Fahrzeugreifens gelöst, insbesondere durch die Verwendung eines beschriebenen Verfahrens, wobei der Fahrzeugreifen mindestens eine Karkasse, mindestens zwei Seitenwände und ein Gürtelpaket aufweist, wobei zumindest eine Seitenwand mindestens zwei Abschnitte aufweist, wobei die Vorrichtung zumindest eine Auflegeeinrichtung zum Auflegen eines ersten Streifens aus mindestens einer Kautschukmischung auf eine Auflegeeinheit oder eine vorgeformte Karkasse zur Herstellung eines ersten Abschnitts der Seitenwand und eine Aufspuleinrichtung zum spiralförmiges Aufspulen eines zweiten Streifens in mehreren Umdrehungen aus mindestens einer Kautschukmischung auf die Auflegeeinheit oder auf die vorgeformte Karkasse zur Herstellung eines zweiten Abschnitts der Seitenwand umfasst.

Vorteilhafterweise kann mit Hilfe einer solchen erfindungsgemäßen Vorrichtung ein Fahrzeugreifen hergestellt werden, der eine verbesserte Qualität, insbesondere in Bezug auf den Rundlauf, aufweist. Durch die erfindungsgemäße Aufspuleinrichtung kann mindestens ein zweiter Abschnitt der Seitenwand oder beider Seitenwände spiralförmig aufgespult werden, wodurch dieser Abschnitt deutlich besser an die Anforderungen angepasst werden kann. Beispielsweise können somit Teile der Seitenwand in deren Dicke variiert werden. Die Aufspuleinrichtung kann in einer bevorzugten Ausführung zwei unterschiedliche Streifen mit unterschiedlichen Kautschukmischungen und unterschiedlichen Breiten aufspulen. Eine individuelle Anpassung des jeweiligen Abschnitts ist somit je nach Seitenwandtyp und Fahrzeugreifentyp möglich.

Ferner betrifft die Erfindung eine Verwendung der beschriebenen Vorrichtung zur Herstellung eines Fahrzeugreifens, wobei der Fahrzeugreifen mindestens eine Seitenwand mit mindestens zwei Abschnitten umfasst.

Weiterhin wird die Aufgabe der Erfindung durch einen Fahrzeugreifen gelöst, welcher durch ein beschriebenes Verfahren hergestellt wird, wobei der Fahrzeugreifen mindestens eine Seitenwand mit mindestens zwei Abschnitten umfasst, wobei der erste Abschnitt einen ersten einfach umwickelten Streifen aus mindestens einer Kautschukmischung und der zweite Abschnitt einen zweiten spiralförmig angeordneten Streifen aus mindestens einer Kautschukmischung umfasst.

Vorteilhaft ist, dass der erfindungsgemäße Fahrzeugreifen einen verbesserten Rundlauf aufzeigt, da mindestens eine Seitenwand aus einem einfach umwickelten Abschnitt und einen spiralförmig aufgebrachten Abschnitt aufgebaut ist. Vorteilhafterweise können bestimmte Abschnitte der Seitenwand gezielter an die Anforderungen des Fahrzeugreifens angepasst werden.

Weitere Vorteile, die zuvor in Bezug auf das erfindungsgemäße Verfahren sowie die Vorrichtungen beschrieben wurden, gelten ebenfalls für den Fahrzeugreifen. Soweit technisch sinnvoll, gelten auch die zuvor beschriebenen Ausführungen für den Fahrzeugreifen.

Weitere Vorteile und Merkmale des erfindungsgemäßen Verfahrens und der Vorrichtung ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, soweit diese technisch möglich sind, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar, soweit diese technisch möglich sind. Dies gilt auch für die einzelnen Merkmale der nachfolgend diskutierten Ausführungsbeispiele, soweit diese nicht für den Fachmann als zwingend zueinander gehörig erkennbar sind.

### Figurenbeschreibung

Weitere Einzelheiten und Vorteile der vorliegenden Erfindung ergeben sich aus der nachfolgenden Beschreibung der Ausführungsführungsbeispiele in Verbindung mit den Zeichnungen. In dieser zeigen
- Figuren 1a-d: eine erste Ausführungsform des erfindungsgemäßen Verfahrens,
- Figuren 2a-d: eine zweite Ausführungsform des erfindungsgemäßen Verfahrens und
- Figuren 3a-d: eine dritte Ausführungsform des erfindungsgemäßen Verfahrens.

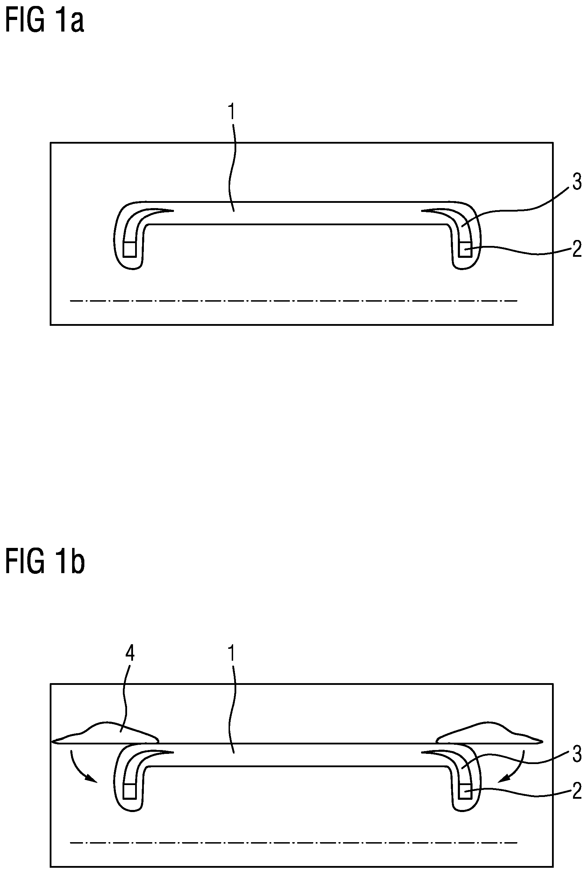

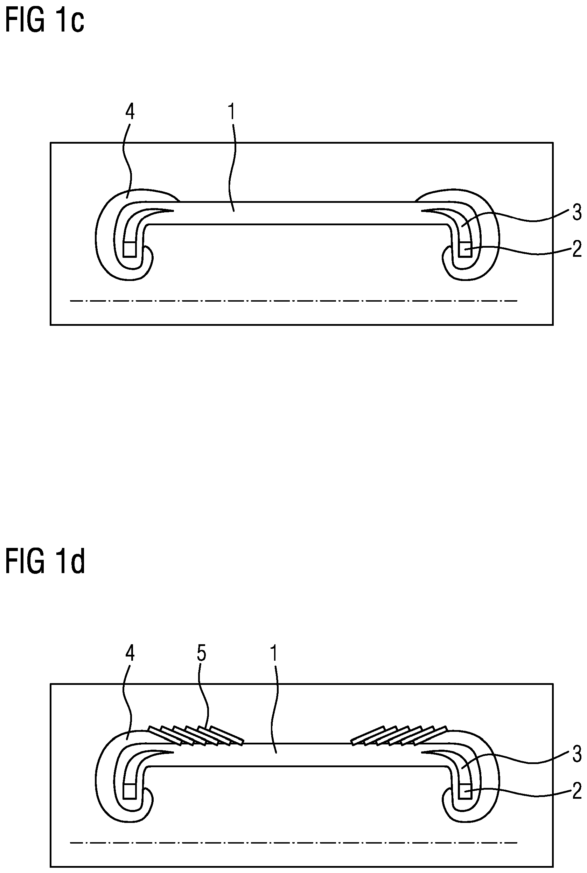

Figuren 1a-d zeigen einen Ausschnitt einer ersten Ausführungsform des erfindungsgemäßen Verfahrens mit einer vorgeformten Karkasse 1, die üblicherweise auf einer Karkasstrommel angeordnet ist (Figur 1a). Die Karkasse 1 umfasst eine Innenschicht und mindestens eine Einlage sowie zwei Kerne 2 mit Apex 3. In Figur 1b ist dargestellt, wie der erste Abschnitt der jeweiligen Seitenwand 4 teilweise auf die vorgeformte Karkasse oberhalb des Wulstbereiches über dem Kern 2 aufgelegt wird. Der überstehende Bereich des ersten Abschnitts wird anschließend entlang der Karkassoberfläche in Richtung des Wulstbereiches heruntergearbeitet. Figur 1c zeigt die vorgeformte Karkasse 1, wobei der erste Abschnitt der jeweiligen Seitenwand 4 heruntergearbeitet ist. Figur 1d zeigt den aufgespulten zweiten Abschnitt der jeweiligen Seitenwand 5. Dieser ist oberhalb des Wulstbereiches angeordnet. Der erste heruntergearbeitete erste Abschnitt der jeweiligen Seitenwand 4 und der zweite aufgespulte zweite Abschnitt der jeweiligen Seitenwand 5 bilden die jeweilig ausgebildete Seitenwand.

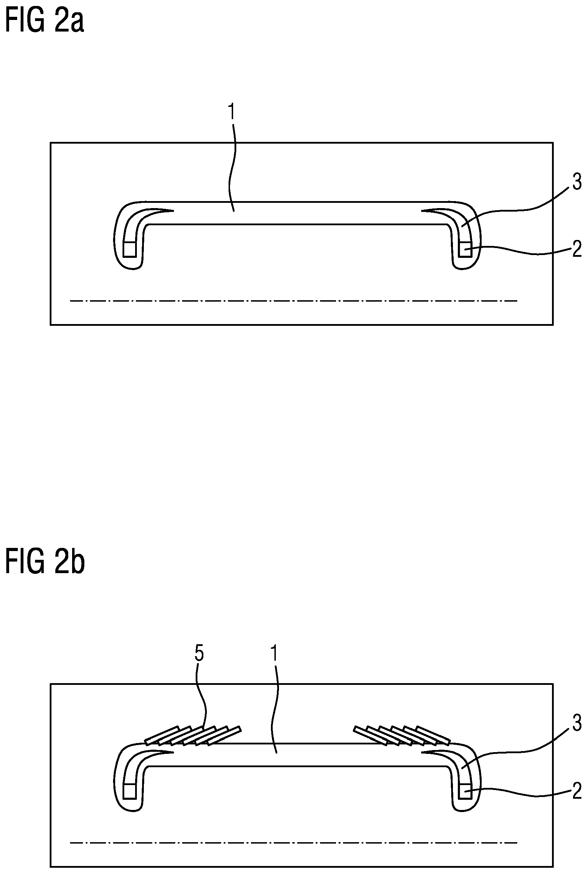

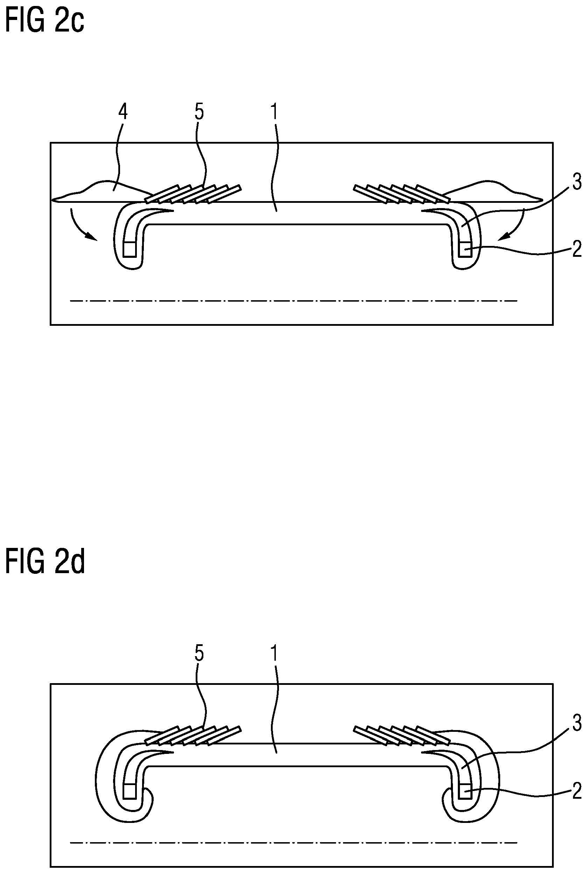

Figuren 2a-d zeigen einen Ausschnitt einer zweiten Ausführungsform des erfindungsgemäßen Verfahrens, wobei sich diese Ausführungsform von der in den Figuren 1a-d lediglich darin unterscheidet, dass das Aufspulen des zweiten Abschnitts der jeweiligen Seitenwand 5 zuerst erfolgt. Im Anschluss daran wird der erste Abschnitt der jeweiligen Seitenwand 4 teilweise auf die vorgeformte Karkasse 1 gelegt und heruntergearbeitet.

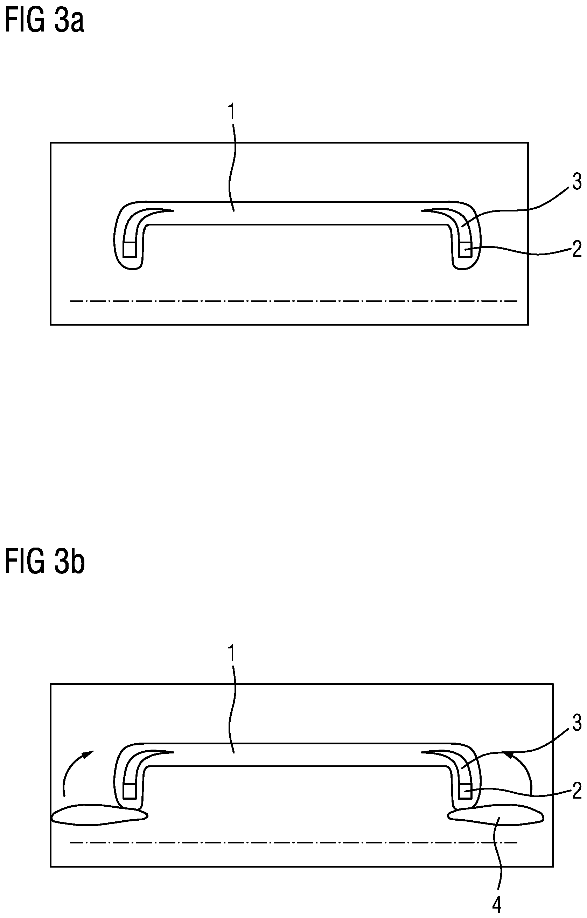

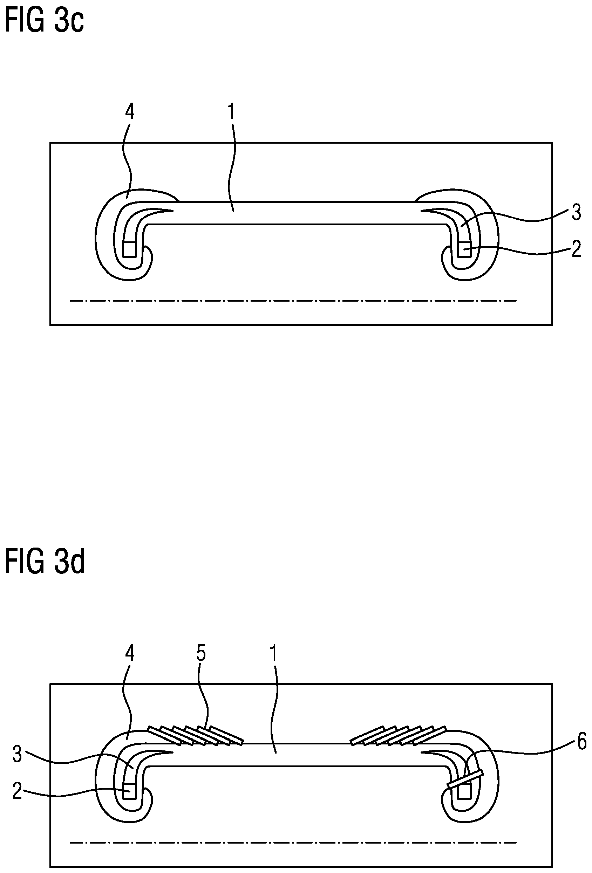

Figuren 3a-d zeigen einen Ausschnitt einer dritten Ausführungsform des erfindungsgemäßen Verfahrens. Figur 3a zeigt eine vorgeformte Karkasse 1, die üblicherweise auf einer Karkasstrommel angeordnet ist. Die Karkasse 1 umfasst eine Innenschicht und mindestens eine Einlage sowie zwei Kerne 2 mit Apex 3. Figur 3b zeigt den nachfolgenden Verfahrensschritt, in dem die beiden ersten Abschnitte der jeweiligen Seitenwand 4 jeweils am unteren Ende des Wulstbereiches aufgelegt und anschließend entlang der Karkassoberfläche hochgearbeitet werden (Figur 3c). Nach dem Hocharbeiten erfolgt das Aufspulen des zweiten Abschnitts der jeweiligen Seitenwand 5, wobei sich dieser Bereich an das Ende des ersten Abschnitts anschließt. Optional kann der Innenbereich der Karkasse teilweise bespult werden, wodurch ein dritter Abschnitt der Seitenwand 6 entsteht (Figur 3d).

### Bezugszeichenliste:

- 1: Karkasse
- 2: Kern
- 3: Apex
- 4: erster Abschnitt einer Seitenwand
- 5: zweiter bespulter Abschnitt der Seitenwand
- 6: dritter Abschnitt der Seitenwand

## Patentansprüche

1. Verfahren zur Herstellung eines Fahrzeugreifens, wobei der Fahrzeugreifen mindestens eine Karkasse (1), mindestens zwei Seitenwände und ein Gürtelpaket aufweist, wobei mindestens eine Seitenwand mindestens zwei Abschnitte (4, 5) aufweist und die Herstellung der mindestens einen Seitenwand zumindest die folgenden Schritte umfasst:
- Herstellen eines ersten Abschnitts (4) der mindestens einen Seitenwand durch Auflegen eines ersten Streifens aus mindestens einer Kautschukmischung auf die Auflegeeinheit oder auf eine vorgeformte Karkasse (1), wobei der erste Streifen einmal um die Auflegeeinheit auflegbar ist und
- Herstellen eines zweiten Abschnitts (5) der mindestens einen Seitenwand durch spiralförmiges Aufspulen eines zweiten Streifens aus mindestens einer Kautschukmischung auf die Auflegeeinheit oder auf die vorgeformte Karkasse (1),
wobei entweder zuerst der erste Abschnitt (4) oder zuerst der zweite Abschnitt (5) hergestellt wird und **gekennzeichnet durch _{.1}**
- Expansion der vorgeformten Karkasse mit den Seitenwänden in ein Gürtelpaket, wobei ein Reifenrohling entsteht.

2. Verfahren nach Anspruch 1, **dadurch gekennzeichnet, dass** der zweite Abschnitt im Bereich über dem Wulstbereich in Richtung der Lauffläche aufgespult wird.

3. Verfahren nach Anspruch 1 oder 2, **dadurch gekennzeichnet, dass** der erste Streifen des ersten Abschnitts (4) ein zumindest teilweise konturierter Streifen ist.

4. Verfahren nach einem der vorherigen Ansprüche, **dadurch gekennzeichnet, dass** der erste Streifen eine Breite im Bereich von 20 mm bis 70 mm und/oder der zweite Streifen eine Breite im Bereich von 30 mm bis 300 mm Gesamtbreite und/oder als Einzelstreifen eine Breite im Bereich von 5 mm bis 40 mm aufweist.

5. Verfahren nach einem der vorherigen Ansprüche, **dadurch gekennzeichnet, dass** der erste Abschnitt (4) nach dem Auflegen um den Wulstbereich heruntergearbeitet wird, wobei der zweite Abschnitt (5) bevorzugt nach dem Herunterarbeiten des ersten Abschnitts (4) aufgespult wird.

6. Verfahren nach einem der Ansprüche 1 bis 4, **dadurch gekennzeichnet, dass** der erste Abschnitt (4) nach dem Auflegen um den Wulstbereich hochgearbeitet wird, wobei der zweite Abschnitt (5) bevorzugt nach dem Hocharbeiten des ersten Abschnitts aufgespult wird.

7. Verfahren nach einem der vorherigen Ansprüche, **dadurch gekennzeichnet, dass** zwei Seitenwände parallel auf einer Auflegeeinheit oder einer vorgeformten Karkasse (1) hergestellt werden.

8. Verfahren nach einem der vorherigen Ansprüche, **dadurch gekennzeichnet, dass** die Auflegeeinheit eine Trommel, insbesondere eine Karkasstrommel oder eine Bombiertrommel oder eine kombinierte Karkass- und Bombiertrommel, umfasst.

9. Vorrichtung zur Herstellung eines Fahrzeugreifensdurch die Verwendung eines Verfahrens nach einem der Ansprüche 1 bis 8, wobei der Fahrzeugreifen mindestens eine Karkasse, mindestens zwei Seitenwände und ein Gürtelpaket aufweist, wobei zumindest eine Seitenwand mindestens zwei Abschnitte aufweist,
**dadurch gekennzeichnet, dass** die Vorrichtung zumindest eine Auflegeeinrichtung zum Auflegen eines ersten Streifens aus mindestens einer Kautschukmischung auf eine Auflegeeinheit oder eine vorgeformte Karkasse zur Herstellung eines ersten Abschnitts (4) der Seitenwand und eine Aufspuleinrichtung zum spiralförmiges Aufspulen eines zweiten Streifens aus mindestens einer Kautschukmischung auf die Auflegeeinheit oder auf die vorgeformte Karkasse zur Herstellung eines zweiten Abschnitts (5) der Seitenwand umfasst.

10. Verwendung einer Vorrichtung nach Anspruch 9 zur Herstellung eines Fahrzeugreifens, wobei der Fahrzeugreifen mindestens eine Seitenwand mit mindestens zwei Abschnitten (4, 5) umfasst.

11. Fahrzeugreifen hergestellt durch ein Verfahren nach einem der Ansprüche 1 bis 8, **dadurch gekennzeichnet, dass** der Fahrzeugreifen mindestens eine Seitenwand mit mindestens zwei Abschnitten (4, 5) umfasst, wobei der erste Abschnitt (4) einen ersten einfach umwickelten Streifen aus mindestens einer Kautschukmischung und der zweite Abschnitt (5) einen zweiten spiralförmig angeordneten Streifen aus mindestens einer Kautschukmischung umfasst.

## Claims

1. Method for producing a vehicle tyre, wherein the vehicle tyre has at least one carcass (1), at least two sidewalls and a belt assembly, wherein at least one sidewall has at least two portions (4, 5), and the production of the at least one sidewall comprises at least the following steps:
- producing a first portion (4) of the at least one sidewall by placing a first strip consisting of at least one rubber compound onto the lay-up unit or onto a preformed carcass (1), wherein the first strip can be placed once around the lay-up unit, and
- producing a second portion (5) of the at least one sidewall by spirally winding a second strip consisting of at least one rubber compound onto the lay-up unit or onto the preformed carcass (1),
wherein either first the first portion (4) or first the second portion (5) is produced, and is **characterized by**
- expansion of the preformed carcass with the sidewalls into a belt assembly, thereby creating a green tyre.

2. Method according to Claim 1, **characterized in that** the second portion is wound on in the direction of the tread in the region above the bead region.

3. Method according to Claim 1 or 2, **characterized in that** the first strip of the first portion (4) is an at least partially contoured strip.

4. Method according to one of the preceding claims, **characterized in that** the first strip has a width in the range from 20 mm to 70 mm and/or the second strip has a width in the range from 30 mm to 300 mm overall width and/or as a single strip a width in the range from 5 mm to 40 mm.

5. Method according to one of the preceding claims, **characterized in that**, after placement around the bead region, the first portion (4) is turned down, wherein the second portion (5) is preferably wound on after the turning down of the first portion (4).

6. Method according to one of Claims 1 to 4, **characterized in that**, after placement around the bead region, the first portion (4) is turned up, wherein the second portion (5) is preferably wound on after the turning up of the first portion.

7. Method according to one of the preceding claims, **characterized in that** two sidewalls are produced in parallel on a lay-up unit or a preformed carcass (1).

8. Method according to one of the preceding claims, **characterized in that** the lay-up unit comprises a drum, in particular a carcass drum or a shaping drum or a combined carcass-and-shaping drum.

9. Apparatus for producing a vehicle tyre by using a method according to one of Claims 1 to 8, wherein the vehicle tyre has at least one carcass, at least two sidewalls and a belt assembly, wherein at least one sidewall has at least two portions,
**characterized in that** the apparatus comprises at least a lay-up device for placing a first strip consisting of at least one rubber compound onto a lay-up unit or a preformed carcass for producing a first portion (4) of the sidewall and a winding device for spirally winding a second strip consisting of at least one rubber compound onto the lay-up unit or onto the preformed carcass for producing a second portion (5) of the sidewall.

10. Use of an apparatus according to Claim 9 for producing a vehicle tyre, wherein the vehicle tyre comprises at least one sidewall with at least two portions (4, 5).

11. Vehicle tyre produced by a method according to one of Claims 1 to 8, **characterized in that** the vehicle tyre comprises at least one sidewall with at least two portions (4, 5), wherein the first portion (4) comprises a first singly wound strip consisting of at least one rubber compound and the second portion (5) comprises a second spirally arranged strip consisting of at least one rubber compound.

## Revendications

1. Procédé de fabrication d'un pneu de véhicule, le pneu de véhicule comportant au moins une carcasse (1), au moins deux flancs et une nappe ceinture, au moins un flanc comportant au moins deux sections (4, 5) et la fabrication de l'au moins un flanc comprenant au moins les étapes suivantes :
- de fabrication d'une première section (4) de l'au moins un flanc en plaçant une première bande composée d'au moins un mélange de caoutchouc sur l'unité de placement ou sur une carcasse (1) préformée, la première bande pouvant être placée une fois autour de l'unité de placement, et
- de fabrication d'une deuxième section (5) de l'au moins un flanc en enroulant en spirale une deuxième bande composée d'au moins un mélange de caoutchouc sur l'unité de placement ou sur la carcasse (1) préformée,
soit la première section (4) soit la deuxième section (5) étant d'abord fabriquée, et **caractérisé par**
- l'expansion de la carcasse préformée avec les flancs dans une nappe ceinture, une ébauche de pneu étant produite.

2. Procédé selon la revendication 1, **caractérisé en ce que** la deuxième section est enroulée en direction de la bande de roulement dans la zone au-dessus de la zone de talon.

3. Procédé selon la revendication 1 ou 2, **caractérisé en ce que** la première bande de la première section (4) est une bande au moins en partie contourée.

4. Procédé selon l'une des revendications précédentes, **caractérisé en ce que** la première bande présente une largeur dans la plage de 20 mm à 70 mm et/ou la deuxième bande présente une largeur dans la plage de 30 mm à 300 mm de largeur totale et/ou présente, en tant que bande individuelle, une largeur dans la plage de 5 mm à 40 mm.

5. Procédé selon l'une des revendications précédentes, **caractérisé en ce que** la première section (4) est rabattue autour de la zone de talon après avoir été placée, la deuxième section (5) étant enroulée de manière préférée après que la première section (4) a été rabattue.

6. Procédé selon l'une des revendications 1 à 4, **caractérisé en ce que** la première section (4) est retournée autour de la zone de talon après avoir été placée, la deuxième section (5) étant enroulée de manière préférée après que la première section a été retournée.

7. Procédé selon l'une des revendications précédentes, **caractérisé en ce que** deux flancs sont fabriqués en parallèle sur une unité de placement ou une carcasse (1) préformée.

8. Procédé selon l'une des revendications précédentes, **caractérisé en ce que** l'unité de placement comprend un tambour, en particulier un tambour de carcasse ou un tambour de galbage ou un tambour combiné de carcasse et de galbage.

9. Dispositif de fabrication d'un pneu de véhicule en utilisant un procédé selon l'une des revendications 1 à 8, le pneu de véhicule comportant au moins une carcasse, au moins deux flancs et une nappe ceinture, au moins un flanc comportant au moins deux sections,
**caractérisé en ce que** le dispositif comprend au moins un système de placement destiné à placer une première bande composée d'au moins un mélange de caoutchouc sur une unité de placement ou une carcasse préformée pour fabriquer une première section (4) du flanc et un système d'enroulement destiné à enrouler en spirale une deuxième bande composée d'au moins un mélange de caoutchouc sur l'unité de placement ou sur la carcasse préformée pour fabriquer une deuxième section (5) du flanc.

10. Utilisation d'un dispositif selon la revendication 9 pour fabriquer un pneu de véhicule, le pneu de véhicule comprenant au moins un flanc avec au moins deux sections (4, 5).

11. Pneu de véhicule fabriqué par un procédé selon l'une des revendications 1 à 8, **caractérisé en ce que** le pneu de véhicule comprend au moins un flanc avec au moins deux sections (4, 5), la première section (4) comprenant une première bande composée d'au moins un mélange de caoutchouc enroulée une fois et la deuxième section (5) comprenant une deuxième bande composée d'un mélange de caoutchouc disposée en spirale.
